# EUROPEAN PATENT APPLICATION

(11) **EP 4 769 317 A1**
(43) Date of publication of application: **01.07.2026**
(21) Application number: 25223983.5
(22) Date of filing: 16.12.2025
(51) Int. Cl.: G06T 12/20

(54) **IMAGE RECONSTRUCTION USING MULTIPLE RECONSTRUCTION CHAINS FOR RADIATION THERAPY**

(30) Priority: 30.12.2024 US 202419006121
(71) Applicant: Siemens Healthineers International AG, 6312 Steinhausen (CH)
(72) Inventor: HOFMANN, Urs, 5405 Dättwil (CH); THOMPSON, Stephen, Palo Alto, 94304 (US); STRZELECKI, Adam, 5405 Dättwil (CH); MORF, Daniel, 5405 Dättwil (CH)
(74) Representative: Mathisen & Macara LLP

(57) **Abstract**

Example methods and systems for image reconstruction using multiple image reconstruction chains for radiation therapy are described. In one example, a computer system may obtain projection image data 110 associated with a target structure within a patient. The computer system may generate, using a first image reconstruction chain 121, 122, 122N, first volume image data 131, 132, 132N based on the projection image data. The computer system may generate and display, on a display device, a first user interface (UI) 141 view for a user to interact with the first volume image data. The computer system may also generate, using a second image reconstruction chain, second volume image data based on at least one of the following: the projection image data and the first volume image data. The computer system may generate and display, on the display device, a second UI 142 view for the user to interact with the second volume image data.

## Description

### BACKGROUND

Radiation therapy is a widely used cancer treatment modality that uses high-energy radiation to reduce or eliminate cancerous tumors. In practice, applied radiation does not inherently discriminate between a tumor and proximal healthy structures, such as organs, healthy tissues, etc. Ideally, the objective is to deliver a lethal or curative radiation dose to the tumor, while maintaining an acceptable dose level in the healthy structures. Image reconstruction may be performed to generate volume image data based on projection image data associated with a patient. Based on the volume image data, clinicians and planning tools may more accurately target tumors while sparing healthy structures from unnecessary radiation exposure. It is therefore desirable to improve the quality of image reconstruction to enhance the efficacy of radiation therapy and ultimately improve patient outcomes. However, as the quality of image reconstruction improves, its computational complexity and time also increase, which negatively impacts clinical workflow time.

### SUMMARY OF THE INVENTION

According to a first aspect of the present invention, there is provided a method for a computer system to perform image reconstruction for radiation therapy, as defined in claim 1. Optional features are specified in the dependent claims.

According to a second aspect of the present invention, there is provided a computer system as defined in claim 8. Optional features are specified in the dependent claim.

According to a third aspect of the present invention, there is provided a radiation therapy system as defined in claim 10. Optional features are specified in the dependent claims.

### BRIEF DESCRIPTION OF DRAWINGS

FIG. 1 is a schematic diagram illustrating an example of image reconstruction using multiple reconstruction chains for radiation therapy;
FIG. 2 is a flowchart of an example process for a computer system to perform image reconstruction using multiple reconstruction chains for radiation therapy;
FIG. 3 is a schematic diagram illustrating an example radiation therapy system that includes a computer system to perform image reconstruction during a pre-treatment phase of radiation therapy;
FIG. 4 is a schematic diagram illustrating an example radiation therapy system that includes a computer system to perform image reconstruction during a treatment phase of radiation therapy;
FIG. 5 is a flowchart of an example detailed process for a computer system to perform image reconstruction using multiple reconstruction chains for radiation therapy;
FIG. 6 illustrates an example of a first user interface (UI) view for a user to interact with first volume image data generated using a first reconstruction chain;
FIG. 7 illustrates an example of a second UI view for a user to interact with second volume image data generated using a second reconstruction chain;
FIG. 8 is a schematic diagram illustrating an example detailed process for a computer system to perform metric-based comparison between multiple sets of volume image data;
FIG. 9 illustrates an example UI view for a user to interact with multiple sets of volume image data;
FIG. 10A is a schematic diagram illustrating a first example artificial intelligence (AI) engine to perform image reconstruction; and
FIG. 10B is a schematic diagram illustrating a second example AI engine to perform image reconstruction.

### SUMMARY

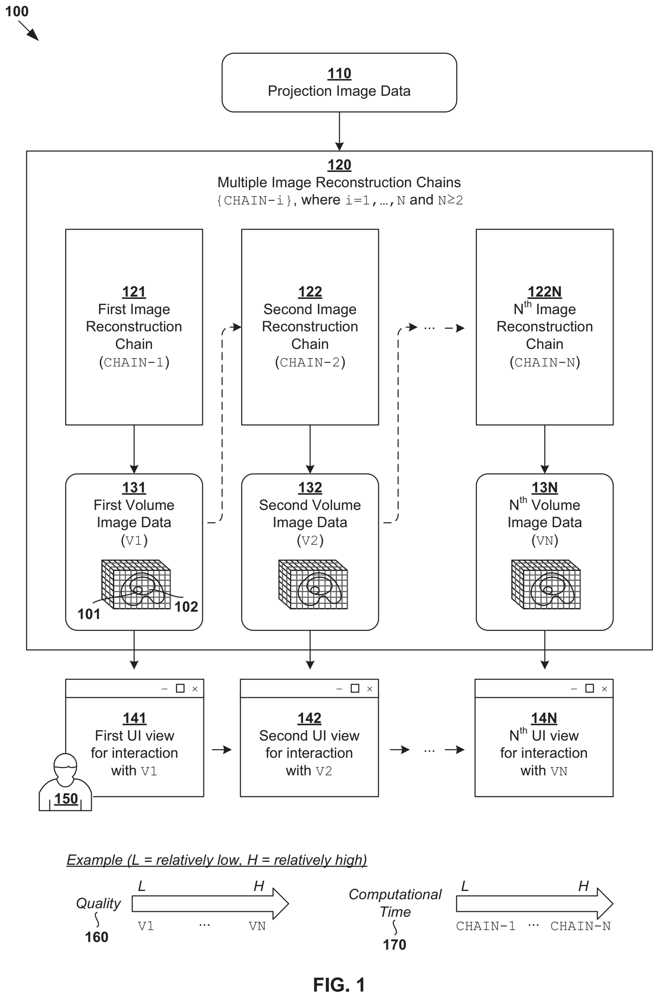

According to examples of the present disclosure, computer system(s) and method(s) for image reconstruction using multiple reconstruction chains for radiation therapy are described (see 120 in FIG. 1). As used herein, the term "image reconstruction chain" or "reconstruction chain" may refer generally to a set of steps or operations for generating volume image data based on projection image data using any suitable algorithm or approach. In practice, the steps or operations for image reconstruction may be implemented using software, hardware, firmware, or any combination thereof. Depending on the desired implementation, examples of the present disclosure may be implemented to enhance the efficacy of radiation therapy while reducing clinical workflow time. This may ultimately improve patient outcomes and increase the number of patients treatable on a single radiation therapy system.

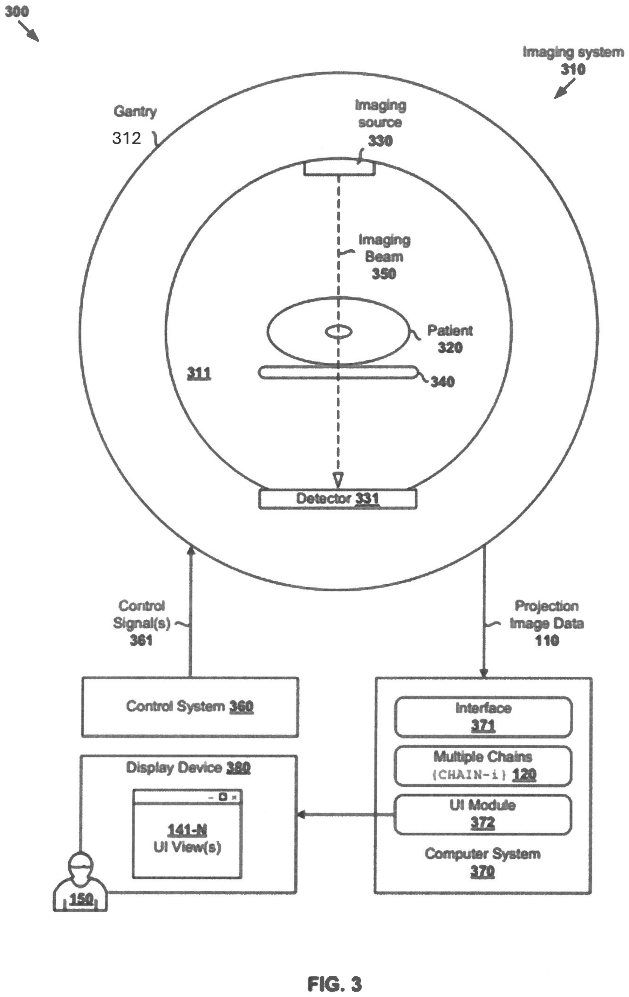

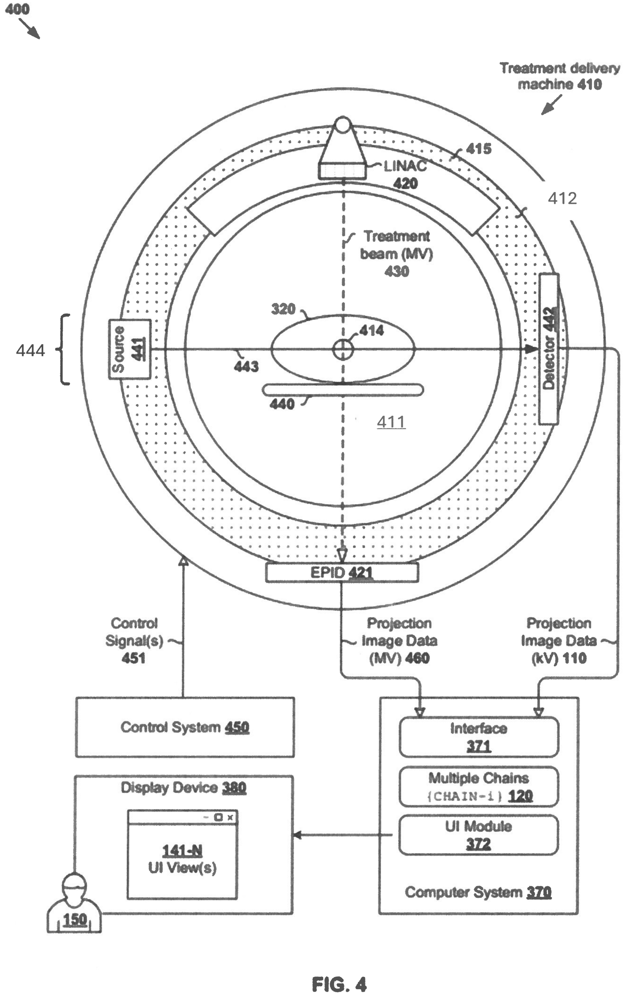

In one example, a computer system (see 370 in FIG. 3 or FIG. 4) may obtain projection image data associated with a target structure within a patient requiring radiation therapy. The computer system may generate, using a first image reconstruction chain, first volume image data associated with the target structure based on the projection image data (see 110, 121 and 131 in FIG. 1). A first user interface (UI) view may be generated and displayed on a display device for a user to interact with the first volume image data (see 141 in FIG. 1).

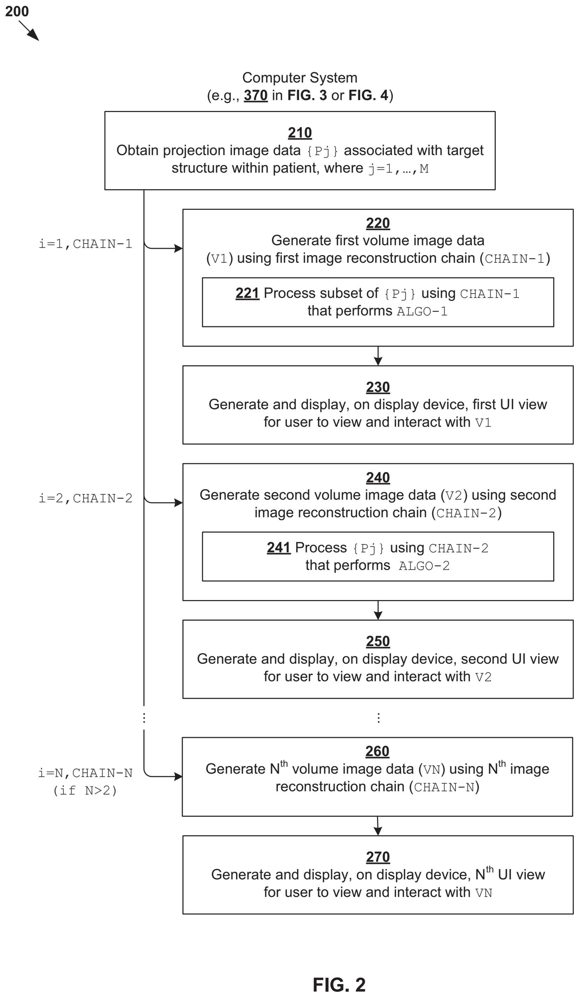

Further, the computer system may generate, using a second image reconstruction chain, second volume image data associated with the target structure based on the projection image data and/or the first volume image data (see 110, 122 and 132 in FIG. 1). A second UI view may be generated and displayed on the display device for the user to view and interact with the second volume image data (see 142 in FIG. 1). See also 210-250 in FIG. 2.

Examples of the present disclosure may further a computer system that includes a processor and a non-transitory computer-readable medium having stored thereon instructions that, when executed by the processor, cause the processor to perform aspect(s) of the above method(s). Another aspect may include a non-transitory computer-readable storage medium that includes a set of instructions which, in response to execution by a processor, cause the processor to perform aspect(s) of the above method(s). Yet another aspect may include a computer program comprising instructions that, when executed by a computer system, cause the computer system to carry out aspect(s) of the above method(s). A further aspect may include a radiation therapy system that includes an imaging system and a computer system to perform aspect(s) of the above method(s). The imaging system may include an imaging source and a detector (also known as an imager).

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the drawings, can be arranged, substituted, combined, and designed in a wide variety of different configurations, all of which are explicitly contemplated herein. Although the terms "first" and "second" are used to describe various elements, these elements should not be limited by these terms. These terms are used to distinguish one element from another. For example, a first element may be referred to as a second element, and vice versa. Independent of the grammatical term usage, individuals with male, female or other gender identities are included within the term.

Imaging modalities such as cone-beam computed tomography (CBCT) are widely used in clinical settings for diagnosis of various diseases, as a tool during surgical procedures, as a positioning tool prior to radiation therapy, etc. To facilitate visualization of a patient's internal anatomy, image reconstruction may be performed to generate three-dimensional (3D) volume image data of a patient's internal anatomy based on two-dimensional (2D) projection image data (also known as projections) that is acquired using an imaging system.

In practice, image reconstruction algorithms generally show a trade-off between (a) accuracy or image quality and (b) reconstruction speed. For example, it has been observed that users (e.g., clinicians) tend to select an image reconstruction algorithm with reduced quality prior to a scan for the advantage of having faster results after the scan. In this case, re-reconstructions using more complex algorithms may be performed offline when the patient is no longer in the imaging or treatment machine. This usually involves changing to a different mode on the machine.

The selection of a less accurate algorithm is often made to have faster workflows and more timely clinical decision-making, as required in some hospital settings. This may be motivated by the fact that achieving high-quality reconstruction requires more complex algorithms and increased computational power, resulting in longer reconstruction times. However, without high-quality image reconstruction, it becomes more challenging to distinguish between target structures requiring radiation therapy and proximal healthy structures, whose exposure to radiation should be minimized. It furthermore limits the usability of the reconstructed volume for downstream processes such as adaptive radiotherapy that requires high quantitative accuracy. This, in turn, may lead to less effective treatment planning and delivery, thereby affecting patient outcomes.

### Multiple image reconstruction chains

According to examples of the present disclosure, image reconstruction may be performed using multiple image reconstruction chains, which may be associated with varying levels of image quality levels and reconstruction speeds. An example is shown in FIG. 1, which is a schematic diagram illustrating an example of image reconstruction using multiple image reconstruction chains for radiation therapy 100. Here, multiple (N) image reconstruction chains (see 120) that are denoted as {CHAIN-*i*} may be configured for *i* = 1,...,*N* and *N ≥* 2. Each CHAIN-*i* 12i may be configured to perform image reconstruction to generate 3D volume image data based on 2D projection image data 110 that is acquired using any suitable imaging system.

As used herein, the term "projection image data" (used interchangeably with "2D projection data," "2D projection image" and "projections") may refer generally to data representing properties of illuminating radiation rays transmitted through a subject. The term "volume image data" (also known as "reconstruction" or "reconstructed image") may refer generally to data representing a 3D reconstruction that is generated based on projection image data. Throughout the present disclosure, the *i*^{th} volume image data generated using CHAIN-*i* may be denoted as V*i*.

Each CHAIN-*i* 12i may implement any suitable image reconstruction algorithm(s). Example algorithms may include filtered backprojection (FBP) algorithm, Feldkamp-David-Kress (FDK) algorithm, Defrise-Clack algorithm, iterative reconstruction (IR or iCBCT) algorithm, iterative reconstruction with metal artifact reduction (MAR), four-dimensional (4D) reconstruction, image reconstruction using an artificial intelligence (AI) engine, etc. In practice, FBP may involve applying a filter to projection image data 110 before backprojecting it onto an image plane. A chain may also be implemented using the same core algorithm but involve different projection pre-processing steps or volume processing steps, such as segmentation or denoising procedures.

The FDK and Defrise-Clack algorithms extend the FBP algorithm to account for the geometry of cone-shaped X-ray beams. Iterative reconstruction may involve refining volume image data over multiple iterations. Iterative reconstruction with MAR may involve reducing artifacts caused by a metal implant in a patient. 4D reconstruction may be implemented to extend the concept of 3D image reconstruction by incorporating a fourth dimension (e.g., time) to allow for the reconstruction of dynamic processes, such as respiratory or cardiac motion over time. This is particularly valuable in radiation therapy, where understanding the motion of tumors relative to surrounding tissues helps to improve treatment planning and delivery.

FIG. 2 is a flowchart of example process 200 for a computer system to perform image reconstruction using multiple reconstruction chains for radiation therapy. Example process 200 may include one or more operations, functions, or actions illustrated by one or more blocks, such as 210 to 270. Depending on the desired implementation, various blocks may be combined into fewer blocks, divided into additional blocks, and/or eliminated.

At 210 in FIG. 2, projection image data 110 associated with a target structure within a patient may be obtained. In practice, projection image data 110 may include a set of multiple (*M*) projections denoted as {*Pj*} for *j* = 1, ..., *M.* The term "obtain" or "obtaining" may refer generally to receiving or retrieving data from any suitable source, such as an imaging system, a module/component of the same or a different computer system, or a datastore storing the data. The term "target structure" may refer generally to any suitable structure of interest, such as tumor, organ-at-risk (OAR), healthy tissue, bony structure (e.g., vertebra), etc. Note that projection image data 110 is not limited to being obtained from a single detector; it could originate from multiple sources, angles, energy levels, or even modalities.

As will be described using FIG. 3, projection image data 110 may be acquired using an imaging system during a pre-treatment phase of radiation therapy, such as for diagnosis or treatment planning purposes. Alternatively, as will be described using FIG. 4, projection image data 110 may be acquired using a treatment machine during a treatment phase of radiation therapy, such as for target structure tracking, treatment delivery, patient positioning, adaptive radiation therapy (ART), etc.

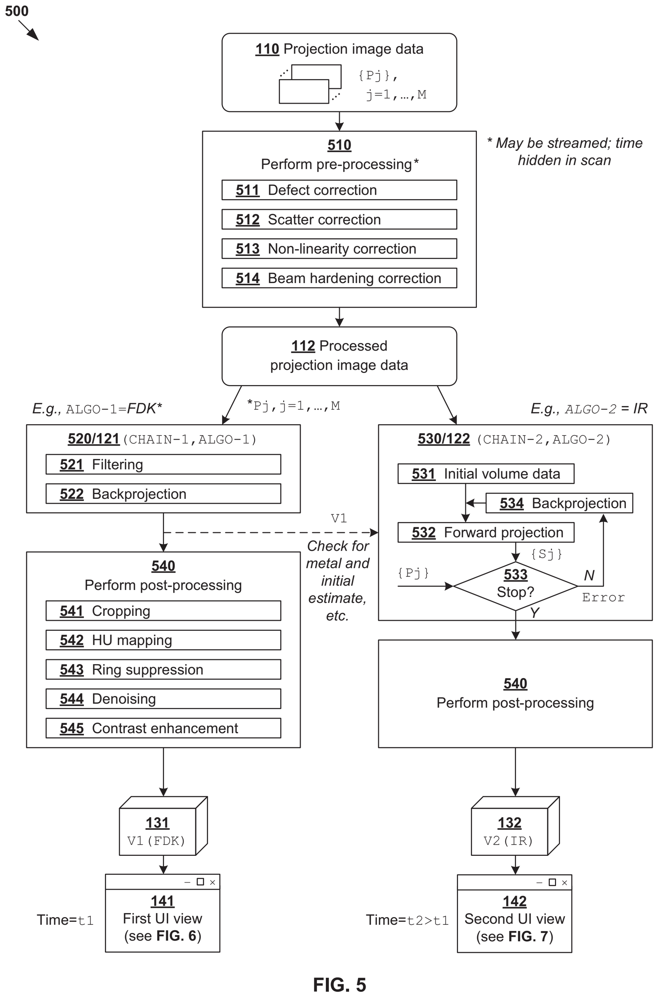

At 220 in FIG. 2, based on projection image data 110, first volume image data (V1) 131 may be generated using a first image reconstruction chain (denoted as CHAIN-1 121 for *i* = 1). At 230 in FIG. 2, a first UI view (see 141 in FIG. 1) may be generated and displayed on a display device for a user (see 150 in FIG. 1) to interact with V1 131. User 150 may be a clinician who is responsible for treatment planning and/or delivery. An example of first UI view 141 will be explained using FIGs. 5-6.

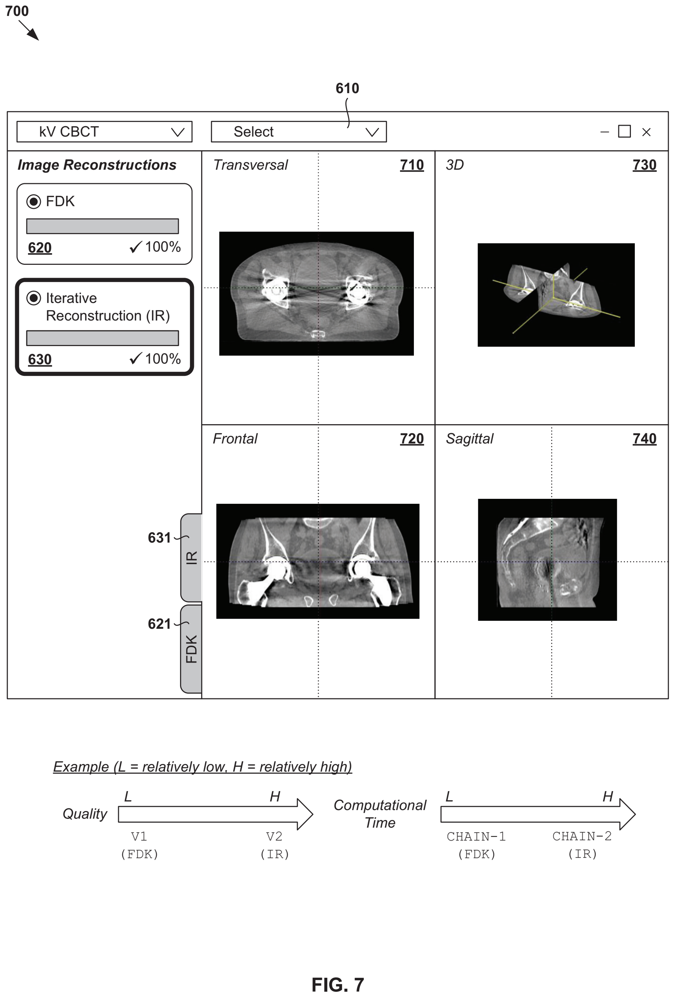

At 240 in FIG. 2, based on projection image data 110 and/or V1 131, second volume image data (V2) 132 may be generated using a second image reconstruction chain (denoted as CHAIN-2 122 for *i* = 2). At 250 in FIG. 2, a second UI view (see 142 in FIG. 1) may be generated and displayed on a display device for user 150 to interact with V2 132. An example of second UI view 142 will be explained using FIGs. 5 and 7.

In practice, examples of the present disclosure may be implemented to facilitate progressive image reconstruction. For example, CHAIN-1 121 may be associated with lower computational time (i.e., faster reconstruction speed) compared to CHAIN-2 122. In this case, V1 131 may be associated with lower image quality compared to V2 132. Once lower-quality volume data V1 131 is generated using CHAIN-1 121, first UI view 141 may be provided to user 150 as a preview before higher-quality volume data V2 132 is available. This way, CHAIN-1 121 may provide faster, albeit lower-quality, reconstructions that allow user 150 to assess the patient's condition and make preliminary clinical decisions or run automated preliminary tasks (e.g., auto-matching). See also 160-170 in FIG. 1.

Meanwhile, CHAIN-2 122 may continue to operate in the background to apply a more complex reconstruction algorithm to generate V2 132, which may be more detailed and accurate compared to V1 131. Once higher-quality V2 132 is available, second UI view 142 may be provided to user 150 by, for example, dynamically transitioning (i.e., live switching) from first UI view 141 to second UI view 142 with substantially low delay or interruption. In one example, CHAIN-1 121 may implement image reconstruction based on the FBP algorithm or an extension thereof (e.g., FDK or Defrise-Clack algorithm). CHAIN-2 122 may implement a more complex algorithm, such as iterative reconstruction, iterative reconstruction with MAR, 4D reconstruction, image reconstruction using an AI engine, etc. See examples in FIGs. 5-7.

Using multiple reconstruction chains 120, examples of the present disclosure allow clinicians to have more rapid access to reconstructions without compromising the quality needed for comprehensive analysis and long-term decision-making. By balancing speed and quality, examples of the present disclosure may be implemented to enhance efficiency, improve patient outcomes, and enhance the overall workflow in medical imaging and treatment processes. This should be contrasted against conventional approaches that necessitate a user to select one algorithm prior to a scan, which may lead to the selection of a faster algorithm that generates lower-quality volume image data.

The multi-output volume framework according to examples of the present disclosure may be scaled to *N* > 2 chains to provide additional pathways for image reconstruction. As shown in FIG. 1, the Nth image reconstruction chain (see CHAIN-N 12*N*) may be configured to generate the Nth image data (V*N*) 13*N* based on at least one of the following: (a) projection image data 110 and (b) output volume image data (V1, ..., V*N -* 1) from any other chain(s). Once V*N* 13*N* is generated, the *N*th UI view 14*N* may be generated and displayed on a display device for user 150 to view and interact with VN 13*N.* See also 260-270 in FIG. 2.

### Example radiation therapy systems

According to examples of the present disclosure, any suitable computer system (or "computer") may be configured to implement multiple reconstruction chains 120 in FIG. 1. Two examples will be discussed below. In a first example, a computer system (see 370 in FIG. 3) may be configured to perform image reconstruction during a pre-treatment phase of radiation therapy, such as for diagnosis and treatment planning purposes. High-quality reconstructed images are important for segmentation, which identifies and delineates a target tumor and surrounding healthy tissues. Based on the segmentation, an effective treatment plan may be developed to deliver radiation doses to the tumor while sparing the healthy tissues.

In a second example, a computer system (see 370 in FIG. 4) may be configured to perform image reconstruction during a treatment phase of radiation therapy. In practice, real-time or near-real-time volume image data (i.e., reconstructed images) enable clinicians to monitor and adjust the treatment delivery based on any detected changes in the patient's anatomy, tumor position and size. The volume image data (Vi) may also be used for patient positioning and target structure tracking during treatment, improving the precision and effectiveness of radiation delivery.

### (a) Pre-treatment phase

FIG. 3 is a schematic diagram illustrating example radiation therapy system 300 that includes computer system 370 to perform image reconstruction during a pre-treatment phase of radiation therapy. Depending on the desired implementation, system 300 may include additional and/or alternative components than that shown in FIG. 3. In this example, radiation therapy system 300 may include imaging system 310 to acquire projection image data 110, control system 360 to control operations of imaging system 310 and computer system 370 to perform image reconstruction according to examples of the present disclosure. Display device 380 may be communicatively coupled with computer system 370 to display user interface (UI) views associated with volume image data generated by computer system 370. Imaging system 310 may include gantry 312 having opening 311 and patient support 340 for supporting patient 320 requiring radiation therapy.

Imaging system 310 may implement any suitable imaging modality for image data acquisition, such computed tomography (CT), positron emission tomography (PET), single photon emission computed tomography (SPECT), magnetic resonance imaging (MRI), magnetic resonance tomography (MRT), any combination thereof, etc. For example, when CT is used, projection image data 110 (e.g., planning CT scan) may include a series of 3D projection images or slices (e.g., CT slices), each representing a cross-sectional view of the patient's anatomy. For treatment planning, projection image data 110 may include 3D volumetric CT data that is used (sometimes in combination with 4D CT) to estimate the motion range of target structure(s). For example, spectral CT data (e.g., dual energy CT (DECT) and photon counting CT) may be acquired instead or additionally to provide access to various quantities at the planning stage.

In the example in FIG. 3, gantry 312 has a ring-based configuration. In an alternative example, gantry may have a C-arm configuration. Imaging system 310 may include imaging or radiation source 330 (e.g., X-ray source) to project imaging beams 350 towards detector 331 having pixel detectors disposed opposite of source 330. Control system 360 may be electrically coupled to gantry 312 to control the latter's operations using control signal(s) 361. Radiation source 330 may be configured to generate any suitable beam, such as fan beam, etc. During an imaging procedure, gantry 312 may be rotated about opening 311 while radiation source 330 generates and directs X-ray beam(s) 350 along a projection line towards patient 320 and detector 331. Detector 331 may measure the X-ray absorption and produce a voltage proportional to the intensity of incident X-rays. The voltage may be read and digitized to generate projection image data 110. Projection image data 110 may include image data acquired at different gantry angles.

According to examples of the present disclosure, computer system 370 may obtain projection image data 110 from imaging system 310 and perform image reconstruction to generate volume image data for display on display device 280. In the example in FIG. 3, computer system 370 may include interface 371 to interact with imaging system 310 to obtain projection image data 110; multiple reconstruction chains 120 to generate multiple sets of volume image data; and UI module 372 to generate and display UI views on display device 380. UI module 372 may also be configured to receive inputs from user 150. Computer system 370 may include any alternative and/or additional components not shown in FIG. 3.

### (b) Treatment phase

FIG. 4 is a schematic diagram illustrating example radiation therapy system 400 that includes computer system 370 to perform image reconstruction during a treatment phase of radiation therapy. Depending on the desired implementation, radiation therapy system 400 may include additional and/or alternative components than that shown in FIG. 4. In this example, radiation therapy system 400 may include treatment delivery machine 410 to deliver treatment to patient 420; control system 450 to control operations of machine 410; and computer system 370 to perform image reconstruction according to examples of the present disclosure.

Treatment delivery machine 410 may include gantry 412 that is rotatable about opening 411 and patient support 440 (e.g., treatment couch) for supporting patient 320. Note that gantry 412 may have a ring-based configuration (shown in FIG. 4) or C-arm configuration (not shown). Treatment delivery machine 410 may include a radiation source in the form of linear accelerator (LINAC) 420 as well as an imager/detector in the form of mega-electron volts (MV) electronic portal imaging device (EPID) 421. LINAC 420 may be configured to generate and direct treatment beam 430 towards isocenter 414 through a PTV associated with patient 320 as gantry 412 is rotated through a treatment arc during VMAT. In practice, treatment beam 430 may be within a high-energy range, such as 1 MV or greater. Radiation therapy may be delivered as a fractionated treatment, where the total radiation dose to be delivered to a tumor is divided into smaller "fractions." This is to allow healthy cells to recover in between fractions from the damage caused by radiation, while tumor cells that are less efficient at recovering may accumulate damage.

Treatment delivery machine 410 may further include on-board imaging system 444 to facilitate kilovolt (kV) imaging during application of MV treatment beam 430. Any suitable image modality or modalities may be used, such as SE or DE CBCT, etc. Imaging system 444 may include at least one kV imaging source 441 and at least one kV imager 442. Compared to LINAC 420, kV imaging source 441 may be capable of producing imaging or diagnostic energy in the range of kV. During treatment delivery, control system 450 may configure kV imaging source 441 to emit and direct kV imaging beam 443 towards imager 442, thereby generating projection image data 110 in the form of kV projection image data. Although described with reference to MV LINAC 420 and MV treatment beam 430, it should be understood that any additional or alternative treatment delivery technique(s) may be used. For example, a proton treatment machine that includes a kV imaging system may be used instead.

Computer system 370 may be communicatively coupled with imaging system 410 to obtain projection image data 110 from on-board imaging system 444 and perform image reconstruction according to examples of the present disclosure. Computer system 370 may include interface 371 to interact with imaging system 444 to obtain projection image data 110; multiple reconstruction chains 120 to generate multiple sets of volume image data; and UI module 372 to generate and display UI views on display device 380. Computer system 370 in FIGs. 3-4 may be implemented using a physical machine (bare metal machine) and/or virtual machine that is deployed in a cloud-based environment (i.e., not located in the same physical location as imaging system 310/440).

### First example (N = 2)

A first example for the case of *N* = 2 will be described using FIG. 5, which is a flowchart of example detailed process 500 for computer system 370 to perform image reconstruction using multiple reconstruction chains 120. Example process 500 may include one or more operations, functions, or actions illustrated by one or more blocks, such as 510 to 540. Depending on the desired implementation, various blocks may be combined into fewer blocks, divided into additional blocks, and/or eliminated. Example process 500 may be performed using computer system 370 in FIGs. 3-4. In the example in FIG. 5, CHAIN-1 121 may implement an algorithm that is based on filtered backprojection (e.g., FBP, FDK or Defrise-Clack) and CHAIN-2 122 may implement an iterative reconstruction algorithm.

Description of the FDK algorithm may be found in the following publication: "Practical cone-beam algorithm" by Feldkamp, L.A., Davis, L.C., Kress, J.W. in J. Opt. Soc. Am. 1(6) (1984). Description of the Defrise-Clack algorithm may be found in the following publications: "Cone-beam reconstruction by the use of Radon transform intermediate functions" by R. Clack, M. Defrise in J. Opt. Soc. Am 11 (2) Feb 1994) and "Direct Reconstruction of Cone-Beam Data Acquired with a Vertex Path Containing a Circle" by Noo. M. Defrise, R. Clack in IEEE Transactions on Image Processing 7 (6) Jun 1998. These publications are incorporated herein by reference. Although one example is shown in FIG. 5, any alternative algorithm may be implemented using CHAIN-2 122. Another example algorithm is described in United States Patent No. 11,173,324 entitled "Iterative image reconstruction in image-guided radiation therapy," which is incorporated herein by reference in its entirety.

### (a) Pre-processing

At 510 in FIG. 5, based on projection image data 110, computer system 370 may perform pre-processing to generate processed projection image data 112 prior to image reconstruction. Any suitable pre-processing operation(s) may be performed at block 510, such as defect correction, scatter correction, non-linearity correction, beam hardening correction, or any combination thereof. Pre-processing may be performed on a projection basis while data acquisition is still running during a scan.

At 511 in FIG. 5, defect correction may involve identifying and correcting any defect(s) in the detector system (e.g., detector 331 in FIG. 3 or 442 in FIG. 4). For example, defects (e.g., dead pixels or areas with inconsistent responses) may cause artifacts in projection image data 110 as well as the resulting volume image data. At 512 in FIG. 5, scatter correction may be performed to mitigate the effects scattered radiation from projection image data 110, thereby enhancing its clarity and contrast. Scattered radiation, which occurs when X-rays deviate from their original path, may cause blurring and reduced contrast.

At 513 in FIG. 5, non-linearity correction may be performed to compensate for the non-linear response of the detector system. This is because detectors may not respond linearly to varying radiation intensities, causing distortions in projection image data 110. Correcting these non-linearities in projection image data 112 ensures a more accurate representation of the true distribution of the radiation. At 514 in FIG. 5, beam hardening correction may be performed to compensate for the effects of beam hardening, where lower X-rays are absorbed more than higher energy X-rays as they pass through a subject. By applying beam hardening correction, projection image data 110 may be adjusted to account for differential energy absorption, thereby improving image quality.

### (b) First reconstruction chain

At 520 and 540 in FIG. 5, based on processed projection image data 112, computer system 370 may perform image reconstruction using CHAIN-1 121 and post-processing to generate V1 131. For example, CHAIN-1 121 may implement the FDK algorithm ("first reconstruction algorithm") for CBCT imaging. In this case, a subset of projection image data 110 may be streamed through CHAIN-1 121 to generate V1 131 that represents an FDK volume. In other words, image reconstruction using CHAIN-1 121 may be performed on a projection basis while projection image data 110 is still being acquired during a scan, thereby achieving a faster reconstruction speed compared to CHAIN-2 122. See also 160-170 in FIG. 1 and 221 in FIG. 2.

At 521 in FIG. 5, filtering may be performed to transform raw projection image data 110 into filtered projection data, such as to reduce noise and/or blurring. Next, at 522, V1 131 may be reconstructed by backprojecting the filtered projection data onto a volumetric grid. For each projection angle, the filtered projection data may be mapped back into a set of spatial coordinates of a volume. This may involve distributing the intensity values from the filtered projection data across corresponding voxels (3D pixels) in the volume. By repeating this process for all projection angles, contributions from all directions may be accumulated to form V1 131.

Any suitable post-processing operation(s) may be performed at block 540, such as cropping, Hounsfield Unit (HU) mapping, ring suppression, denoising, contrast enhancement, etc. Cropping (see 541) may be performed to remove any unnecessary or irrelevant parts of the image, focusing on a preferred area of interest, and reducing the amount of data to be stored and processed. HU mapping (see 542) may be performed to convert the raw reconstructed data into standardized Hounsfield Units, which are used to quantify the radiodensity of tissues. Ring suppression (see 543) may be performed to reduce or eliminate ring artifacts that may appear due to imperfections in the detector system or inconsistencies in the data acquisition process. Denoising (see 544) may be used to reduce image noise within the reconstructed volume. Contrast enhancement (see 545) allows visualization of differently absorbing structures in a single view without adaptation of window/level. One or more of these post-processing steps may be implemented to enhance the usability and accuracy, contributing to better patient care and clinical outcomes.

### (c) Second reconstruction chain

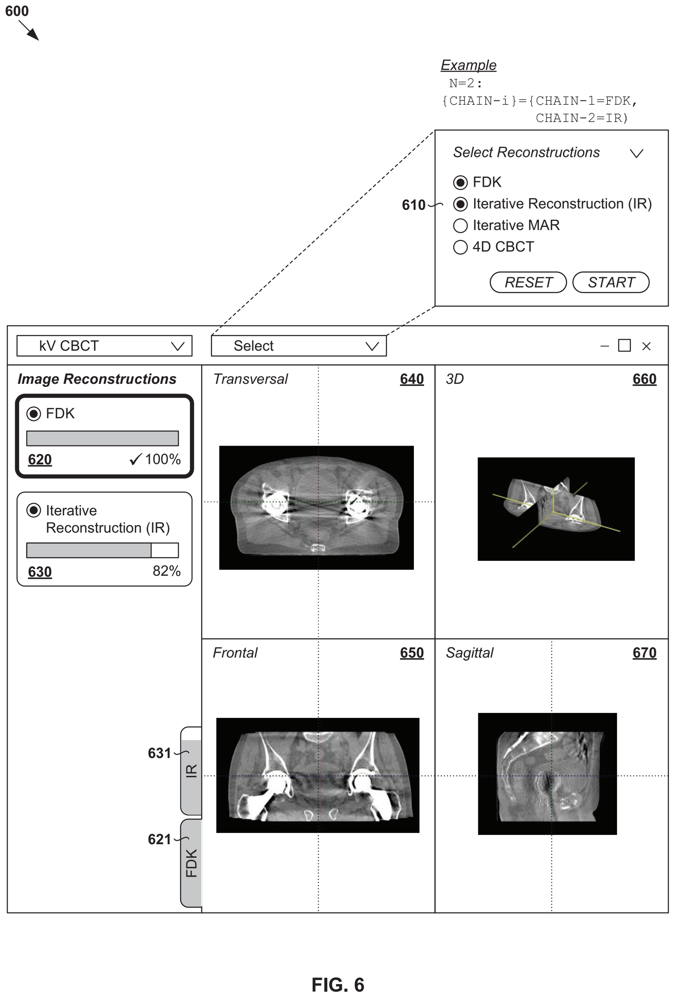

At 530 and 540 in FIG. 5, based on processed projection image data 112 and/or V1 131, computer system 370 may perform image reconstruction using CHAIN-2 122 and post-processing to generate V2 132. For example, CHAIN-2 122 may implement iterative reconstruction ("second reconstruction algorithm") for CBCT imaging. Compared to CHAIN-1 121 that may operate on a subset of projection image data 110, iterative reconstruction may require a full set of projection image data 110 to start. As such, while user 150 interacts with first UI view 600 in FIG. 6, CHAIN-2 122 may run in the background to perform more computationally intense operations. See also 160-170 in FIG. 1 and 241 in FIG. 2.

In practice, iterative reconstruction is a process for improving the quality of reconstructed images through repeated refinement over multiple iterations. At 531 in FIG. 5, initial volume data representing a rough estimate of the output volume image data may be initialized. At 532, the initial volume data is then subjected to forward projection, where simulated projection data is generated by projecting the input volume data onto the same or similar detector geometry used during the actual acquisition of projection image data 110.

At 533 in FIG. 5, the simulated projection image data (denoted as {*Sj*}, *j =* 1, ..., *M*) may be compared with input projection image data 110/112 (denoted as {*Pj*}*, j* = 1, ..., *M*) to determine whether a stopping condition is met. If not, at 534, a residual volume may be determined based on the comparison (i.e., difference or error data between {*Pj*} and {*Sj*})*.* The residual volume is then used to update the volume data in a process called backprojection. This cycle of forward projection and backprojection continues iteratively.

During each iteration, the volume data may be updated, aiming for convergence, which is the point where the discrepancies (i.e., error) between the simulated and input projection image data satisfies a threshold. Another stopping condition at block 533 may be reaching a maximum number of iterations. Additionally, at 540, post-processing may be performed, the details of which have been explained with reference to CHAIN-1 121 and will not be repeated here for brevity. The output volume data of CHAIN-2 122 and post-processing is denoted as V2 132. Any suitable optimizations for fast convergence may be used during the iterative reconstruction, examples include subsets or momentum. Also, different regularization approaches may be employed to facilitate stabilization of the convergence as well as noise suppression in the output volume.

In practice, the FDK algorithm implemented by CHAIN-1 121 may offer faster results, but with potential compromises in detail and clarity. Conversely, the iterative reconstruction algorithm implemented using CHAIN-2 122 may provide V2 132 with improved image quality at the cost of increased computational time. Instead of necessitating user 150 to choose between these algorithms, multiple reconstruction chains 121-122 may be implemented according to examples of the present disclosure to leverage the strengths of each algorithm.

Depending on the desired implementation, V1 131 may be used as the initial volume data at block 531 to prime or initialize the iterative reconstruction algorithm. V1 131 may be processed prior to block 531, such as to check and correct for metal artifact(s), etc. Using V1 131 as the initial volume data, CHAIN-2 122 may provide further refinement, such as to reduce noise and artifacts to improve the accuracy of the final image. The approach combines the speed of the FDK algorithm implemented by CHAIN-1 121 with the enhanced image quality provided by iterative reconstruction implemented by CHAIN-2 122. Although *N* = 2 chains are shown, additional chain(s) may be configured to provide additional pathway(s) for image reconstruction.

### Example UI views

As used herein, the term "UI" or "UI view" may refer generally to a set of UI elements that may be generated and displayed on a display device. The term "UI element" may refer generally to graphical (i.e., visual) and/or textual element that may be displayed on a display device, such as shape (e.g., circle, rectangle, ellipse, polygon, line, etc.), window, modal, panel or pane, button, check box, menu, dropdown box, editable grid, section, side bar, slider, text box, text block, toggle switch (on/off button), or any combination thereof. UI views may be displayed side by side or nested inside of each other to create more complex layouts. The term "interacting" (e.g., see 230 and 270 in FIG. 2) may refer generally to a range of actions for a user to engage with a UI view, such as viewing, clicking, swiping, changing the orientation and/or size associated with the content of the UI view, annotating, etc. The term "display device" (e.g., see 380 in FIGs. 3-4) may refer generally to any suitable hardware component for presenting visual information to a user, such as a monitor, touchscreen, etc.

### (a) First UI view

FIG. 6 illustrates an example (see 600) of first UI view 141 for user 150 to interact with first volume image data 131. In this example, first UI view 141 may include an UI element for chain selection, such as a dropdown box (see 610) that specifies a list of chains or algorithms supported by computer system 370. To initiate image reconstruction, user 150 may select multiple (*N*) reconstruction chains from dropdown box 610, such as the FDK algorithm and iterative reconstruction for the case of *N* = 2. Once *N* reconstruction chains are selected, image reconstruction may be performed using the selected chains in a substantially parallel manner. The term "substantially parallel" may refer generally to at least two reconstruction chains processing projection image data 110 independently and/or concurrently.

Based on the selection of *N* reconstruction chains, computer system 370 may generate and display multiple status indicators on display device 380 to provide visual feedback on the status of respective reconstruction chains 121-122. Any suitable status indicator may be generated and displayed, such as progress bars, charts, graphs, meters, tabs with built-in progress bar, and any other type of visual feedback. In the example in FIG. 6, computer system 370 may generate and dynamically update first status indicator 620 and second status indicator 630 to indicate the progress (e.g., 0% to 100%) of respective CHAIN-1 121 and CHAIN-2 122. The status may also be indicated on a UI element (e.g., tab; see 621/631) associated with each chain 121/122.

Once V1 131 is generated using CHAIN-1 121, computer system 370 (e.g., using UI module 372) may generate and display first UI view 141 on display device 380 for user 150 to interact with V1 131. In the example in FIG. 6, first UI view 141 may present V1 131 from different orientations or perspectives, such as transversal view (see 640), frontal view (see 650), 3D view (see 660) and sagittal view (see 670). In practice, transversal view 640 represents a view from a horizontal plane that divides the body of patient 320 into upper (superior) and lower (inferior) sections. Frontal view 650 represents a view from a vertical plane that divides the body into front (anterior) and back (posterior) sections. 3D view 660 may be a representation that combines data from multiple planes to allow visualization in 3D. Sagittal view 670 represents a view from another vertical plane that divides the body into left and right sections. Any additional and/or alternative view(s) may be provided.

### (b) Second UI view

Once V2 132 is generated using CHAIN-2 122, computer system 370 (e.g., using UI module 372) may generate and display second UI view 142 on display device 380 for user 150 to interact with V2 132. Alternatively or additionally, computer system 370 may generate and display second UI view 142 as V2 132 is being generated using CHAIN-2 122 prior to meeting a stopping condition at block 533 in FIG. 5. In the latter case, computer system 370 may dynamically and continuously update V2 132 on second UI view 142 as more iterations are performed to refine V2 132.

FIG. 7 is an example (see 700) of second UI view 142 for user 150 to interact with second volume image data 132. Second UI view 142 includes UI elements (see status indicators 630-631) to indicate the completion of image reconstruction using iterative reconstruction using CHAIN-2 122. Similar to the example in FIG. 6, second UI view 142 in FIG. 7 may present V2 132 using multiple views, such as transversal view (see 710), frontal view (see 720), 3D view (see 730) and sagittal view (see 740).

Using examples of the present disclosure, first UI view 141 may be generated and provided to user 150 as a preview. For less complex algorithms (e.g., FBP and FDK), reconstruction may be initialized during a scan by backprojecting a subset of projection image data 110 (e.g., the first images) into the volume. This approach reduces the delay between completing a scan and providing a preview (i.e., V1 141) to user 150. Meanwhile, image reconstruction using CHAIN-2 122 may continue to run in the background. Since iterative reconstruction generally requires a full set of projection image data 110 to start, more time is required to generate and present V2 132.

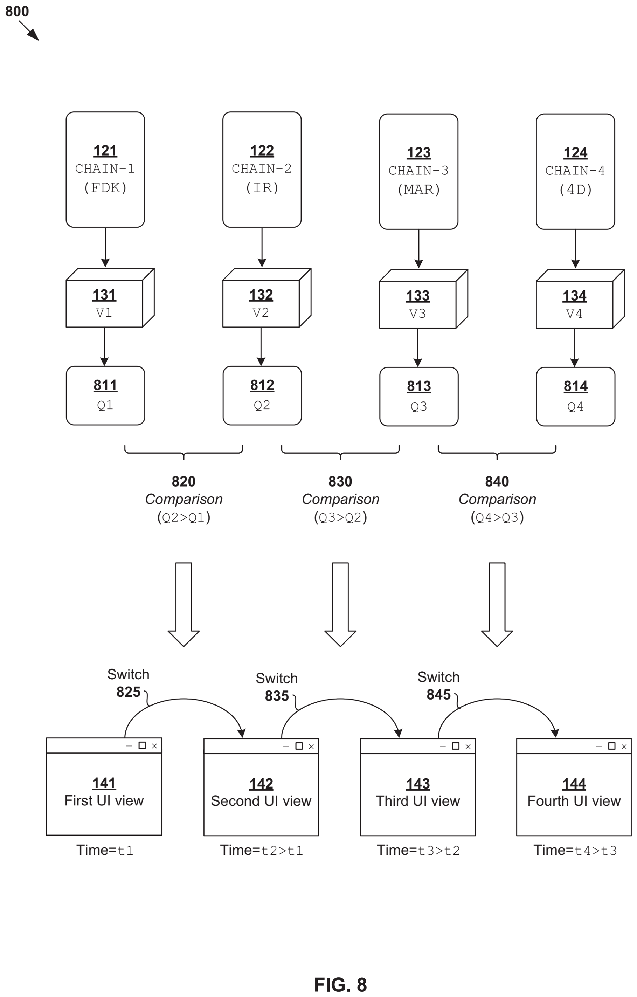

The time between the availability of V1 131 (e.g., low-quality volume data) in FIG. 6 and V2 132 (e.g., high-quality volume data) in FIG. 7 may be utilized by user 150 to perform other tasks, such as scrolling to a preferred position in the reconstructed volume, adjusting a window/level, performing rough adjustments (e.g., rough matching tasks), etc. High-quality volume data is usually not required for rough adjustments. In one example, the switch from first UI view 141 to second UI view 142 may be performed automatically. In another example, the switch may be based on user input(s), such as generating and displaying a dialog box (not shown) to indicate that V2 132 is available and to offer user 150 to switch to second UI view 142. In a further example, the switch from one UI view to another may be metric-based (to be discussed using FIG. 8).

### Second example (N > 2)

A second example for the case of *N* > 2 will be described using FIG. 8, which is a schematic diagram illustrating an example detailed process (see 800) for computer system 370 to perform metric-based comparison between multiple sets of volume image data 131-134. In the example in FIG. 8, *N* = 4 chains are configured, i.e., CHAIN-1 121 (e.g., FDK algorithm), CHAIN-2 122 (e.g., iterative reconstruction algorithm), CHAIN-3 123 (e.g., iterative reconstruction with MAR) and CHAIN-4 124 (e.g., 4D reconstruction). The output volume image data of chains 121-124 may be denoted as V1 131, V2 132, V3 133 and V4 134, respectively. It should be understood that any additional and/or alternative chain(s) may be configured.

In practice, iterative reconstruction with MAR may be performed to reduce artifacts caused by metal objects, such as implants, artificial joints, pacemakers, etc. These metal objects may create artifacts (e.g., streaks and shadows) in projection image data 110 and/or the resulting volume image data. In this case, iterative reconstruction with MAR may involve computer system 370 identifying and applying corrections to metal-affected regions. 4D CBCT may be implemented based on projection image data 110 that is acquired over time to account for motion, such as cardiac motion at distinct phases of a patient's respiratory cycle. Projections are then sorted into bins associated with the respective phases before applying iterative reconstruction to create phase-specific volume image data. This approach allows for better targeting and monitoring of moving organs.

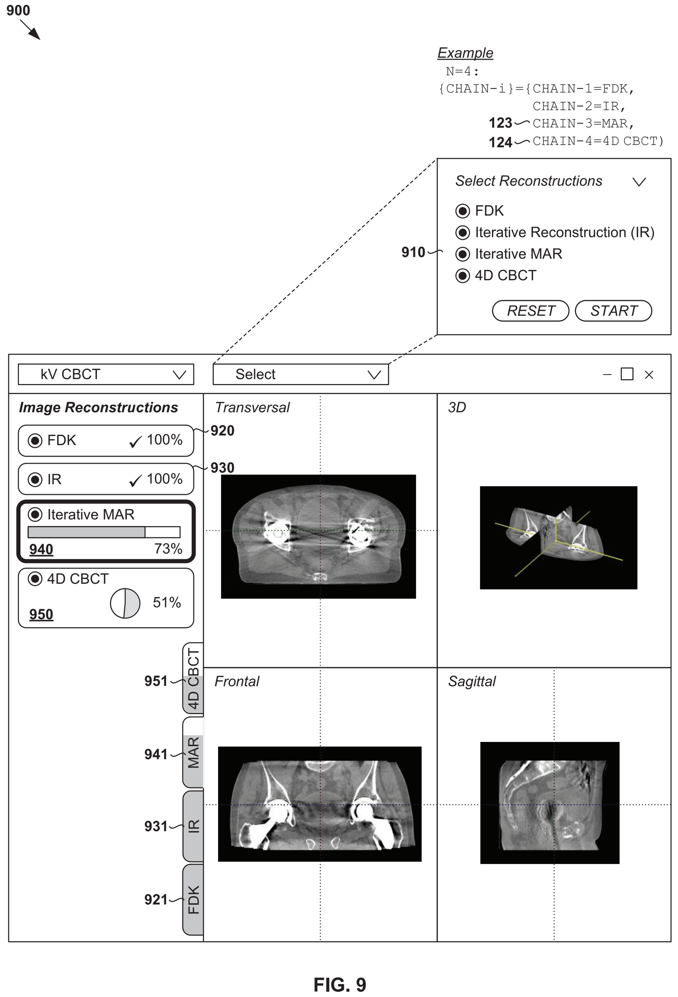

The example in FIG. 8 will be described using FIG. 9, which illustrates an example UI view (see 900) for user 150 to interact with multiple sets of volume image data 131-134. Using a dropdown box (see 910), user 150 may select *N* = 4 chains 121-124 to perform image reconstruction in a substantially parallel manner. As image reconstruction is being performed, computer system 370 may generate and display, on display device 380, status indicators to indicate the progress of respective chains 121-124. Each status indicator may be in any suitable form, such as progress bar (see 920, 930, 940), chart (see 950), or tab with built-in progress bar (see 921, 931, 941, 951).

In the example in FIG. 9, first status indicators (see 920-921) may be generated and updated to indicate progress = 100% (i.e., completed) for CHAIN-1 121. Second status indicators (see 930-931) may be updated to indicate progress = 100% for CHAIN-2 122. Third status indicators (see 940-941) may be updated to indicate progress = 73% for CHAIN-3 123, and fourth status indicators (see 950-951) to indicate progress = 51% for CHAIN-4 124. A side bar (see left-hand side) may include navigation elements or interactive components for user 150 to select and switch between different sets of volume image data.

### Metric-based comparison and live switching

Referring to FIG. 8 again, computer system 370 may determine quality metric data (denoted as Q*i*) associated with volume image data (V*i*). For example, first quality metric data (Q1) 811 is associated with V1 131, second quality metric data (Q2) 812 with V2 132, third quality metric data (Q3) 813 with V3 133, and fourth quality metric data (Q4) 813 with V4 134. As used herein, the term "quality metric data" may refer generally to a quantitative measure to assess or quantify the quality of each set of volume image data. Example metric data may include metric(s) for evaluating the presence and impact of artifacts in volume image data, such as mean squared error (MSE), root mean squared error (RMSE), signal-to-noise ratio (SNR), contrast-to-noise ratio (CNR), etc. Depending on the desired implementation, more specific algorithms for detecting modality-specific artifacts, such as streaks along a certain direction, may be employed. The detection of the artifacts may utilize data in the spatial or frequency domain. It may involve observer models or trained Al-based approaches. One example is a learning system that adapts the preferred preview over time based on the operator's choice.

At 820-840 in FIG. 8, computer system 370 may compare any two sets of volume image data denoted as (V*i*, V*k*) based on respective sets of quality metric data (*Qi, Qk*) for *i, k ∈* [1, ..., *N*] and *i* ≠ *k.* This way, computer system 370 may initiate live switching to transition one UI view to another UI view to present user 150 with higher-quality volume image data. The term "live switching" may refer generally the transition from one UI view to another UI view, such as to facilitate dynamic content update. For example, metal artifacts caused by metal implants may be detected in V1 131 generated using CHAIN-1 121 (e.g., FDK) or V2 132 generated using CHAIN-2 122 (e.g., iterative reconstruction). Once V3 133 is generated using CHAIN-3 123 (e.g., iterative reconstruction with MAR), third UI view 143 may be generated and displayed for user 150 to interact with V3 133.

In more detail, at 820-825 in FIG. 8, based on a comparison between Q1 811 and Q2 812, computer system 370 may determine whether V2 132 is associated with higher quality (e.g., fewer artifacts and/or higher contrast) compared to V1 131. If yes, computer system 370 may switch or transition first UI view 141 to second UI view 142 such that user 150 is able to interact with higher-quality V2 132. Here, first UI view 141 may be generated at time = t1 and second UI view 142 at later time = t2.

At 830-835 in FIG. 8, based on a comparison between Q2 812 and Q3 813, computer system 370 may determine whether V3 133 is associated with higher quality compared to V2 132. If yes, computer system 370 may switch or transition from second UI view 142 to third UI view 143 such that user 150 is able to interact with higher-quality V3 133 on display device 380. Since CHAIN-3 123 may require more computational time compared to CHAIN-2 122, second UI view 142 may be generated at time = t2 and third UI view 143 at later time = t3.

Further, at 840-845 in FIG. 8, based on a comparison between Q3 813 and Q4 814, computer system 370 may determine whether V4 134 is associated with higher quality compared to V3 133. If yes, computer system 370 may switch or transition from third UI view 143 to fourth UI view 144 such that user 150 is able to interact with higher-quality V4 134 on display device 380. Since CHAIN-4 124 may require more computational time compared to CHAIN-3 132, third UI view 143 may be generated at time = t3 and fourth UI view 144 at later time = t4. In practice, live switching may be initiated from one UI view to any other UI view.

### Example AI engines for image reconstruction

Depending on the desired implementation, at least one of multiple (*N*) reconstruction chains 120 may be implemented using an AI engine that is trained to perform image reconstruction. As used herein, the term "AI engine" may refer to any suitable hardware and/or software components of a computer system that are capable of executing algorithms according to any suitable AI model(s). An "AI engine" may be a machine learning engine based on machine learning model(s), deep learning engine based on deep learning model(s), etc. In general, deep learning is a subset of machine learning in which multi-layered neural networks may be used for feature extraction as well as pattern analysis and/or classification.

Any suitable AI model(s) may be used, such as convolutional neural network, recurrent neural network, deep belief network, generative adversarial network (GAN), autoencoder(s), variational autoencoder(s), long short-term memory architecture for tracking purposes, generative AI model, transformer network, or any combination thereof, etc. In practice, a neural network is generally formed using a network of processing elements (called "neurons," "nodes," etc.) that are interconnected via connections (called "synapses," "weight data," etc.). A processing layer of a convolutional neural network may be a convolutional layer, pooling layer, un-pooling layer, rectified linear units (ReLU) layer, fully connected layer, loss layer, activation layer, dropout layer, transpose convolutional layer, concatenation layer, attention layer, any combination thereof, etc. For example, convolutional neural networks may be implemented using any suitable architecture(s), such as UNet, LeNet, AlexNet, ResNet, VNet, DenseNet, OctNet, etc.

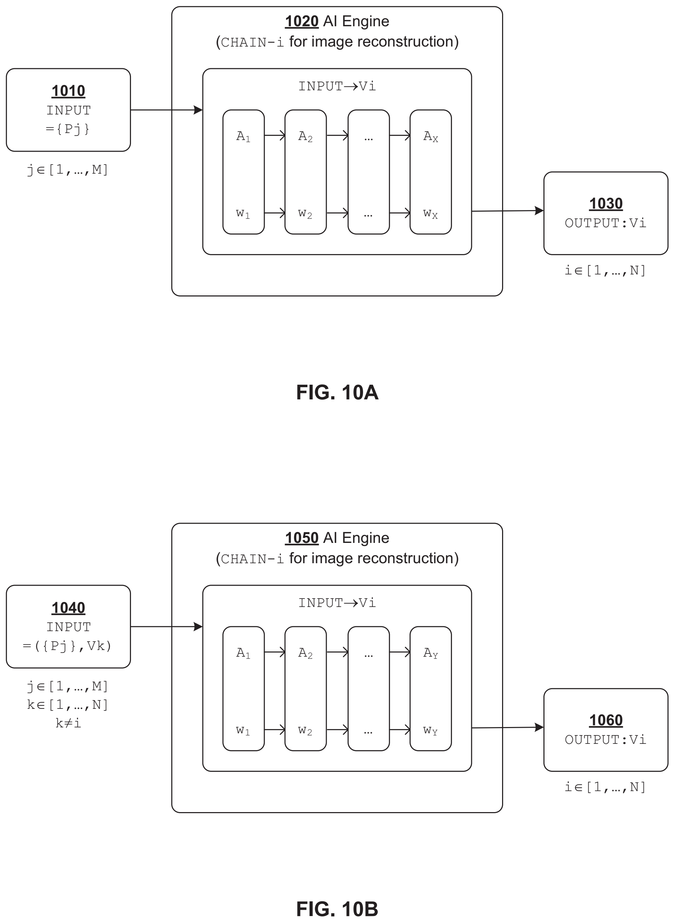

FIG. 10A is a schematic diagram illustrating a first example AI engine to perform image reconstruction. Here, CHAIN-*i* may include first AI engine 1020 that is trained to process and map (a) input data (see 1010) = projection image data denoted as {*Pj*} for *j* = 1, *...,M* to (b) output data (see 1030) = volume image data (V*i*) for the *i^{th}* chain. AI engine 1020 may include a hierarchy of multiple (*X*) processing layers (denoted as *A*₁ to *A_{X}*), such as an input layer, an output layer, and multiple (i.e., two or more) "hidden" layers between the input and output layers. The processing layers (*A*₁ to *A_{X}*) are associated with respective weight data (*w*₁ to *w_{X}*). During training, AI engine 1020 may learn weight data (*w*₁ to *w_{X}*) to perform image reconstruction.

FIG. 10B is a schematic diagram illustrating a second example AI engine to perform image reconstruction. Here, CHAIN-*i* may include second AI engine 1050 that is trained to process and map (a) input data 1040 to (b) output data 1060 = volume image data (V*i*) for the *i^{th}* chain. Compared to FIG. 10A, input data 1010 may include projection image data denoted as {*Pj*} for *j =* 1, ..., *M* and/or volume image data (Vk) generated by a different chain (V*k*), where *i, k ∈* [1, ..., *N*] and *i* ≠ *k*. AI engine 1050 may include a hierarchy of multiple (*Y*) processing layers (denoted as *A*₁ to *A_{Y}*), such as an input layer, an output layer, and multiple (i.e., two or more) "hidden" layers between the input and output layers. The processing layers (*A*₁ to *A_{Y}*) are associated with respective weight data (*w*₁ to *w_{Y}*). During training, AI engine 1050 may learn weight data (*w*₁ to *w_{Y}*) to perform image reconstruction.

AI engine 1020/1050 may be trained using any suitable approach, such as supervised learning, unsupervised learning, semi-supervised learning, reinforcement learning, etc. For example, using supervised learning, AI engine 1020/1050 may be trained on a dataset of labeled examples in order to learn the relationship between (a) input data and (b) output data. Any suitable training data may be used, such as synthetic data, real patient data, or a combination of both. AI engine 1020/1050 may be trained using training data that is specific to patient 320, or a large variation of possible patients. For example, a patient-specific training strategy may tackle the issue of inter-patient and inter-tumor variations (e.g., tumor size, shape, location, motion).

Alternatively, using unsupervised learning, AI engine 1020/1050 may be trained on a dataset of unlabeled examples to learn patterns and relationships in the data without any prior knowledge of the output labels. In semi-supervised learning, both labeled and unlabeled data may be used. Semi-supervised learning is useful in situations where there is a large amount of unlabeled data available, but it might be too expensive or difficult to label all of the data. In reinforcement learning, AI engine 1020/1050 may learn to perform image reconstruction by trial and error where it is rewarded for taking actions that lead to desired outcomes and penalized for taking actions that lead to undesired outcomes.

### Computer system

The above examples can be implemented by hardware (including hardware logic circuitry), software or firmware or a combination thereof. The above examples may be implemented by any suitable computing device, computer system, etc. The computer system (or more simply "computer") may include processor(s), memory unit(s) and physical NIC(s) that may communicate with each other via a communication bus, etc. The computer system may include a non-transitory computer-readable medium having stored thereon instructions or program code that, when executed by the processor, cause the processor to perform processes described herein with reference to the drawings.

The techniques introduced above can be implemented in special-purpose hardwired circuitry, in software and/or firmware in conjunction with programmable circuitry, or in a combination thereof. Special-purpose hardwired circuitry may be in the form of, for example, one or more application-specific integrated circuits (ASICs), programmable logic devices (PLDs), field-programmable gate arrays (FPGAs), and others. The term 'processor' is to be interpreted broadly to include a processing unit, ASIC, logic unit, or programmable gate array etc.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or any combination thereof.

Those skilled in the art will recognize that some aspects of the embodiments disclosed herein, in whole or in part, can be equivalently implemented in integrated circuits, as one or more computer programs running on one or more computers (e.g., as one or more programs running on one or more computing systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure.

Software to implement the techniques introduced here may be stored on a non-transitory computer-readable storage medium and may be executed by one or more general-purpose or special-purpose programmable microprocessors. A "computer-readable storage medium", as the term is used herein, includes any mechanism that provides (i.e., stores and/or transmits) information in a form accessible by a machine (e.g., a computer, network device, personal digital assistant (PDA), mobile device, manufacturing tool, any device with a set of one or more processors, etc.). A computer-readable storage medium may include recordable/non-recordable media (e.g., read-only memory (ROM), random access memory (RAM), magnetic disk or optical storage media, flash memory devices, etc.).

The drawings are only illustrations of an example, wherein the units or procedure shown in the drawings are not necessarily essential for implementing the present disclosure. Those skilled in the art will understand that the units in the device in the examples can be arranged in the device in the examples as described or can be alternatively located in one or more devices different from that in the examples. The units in the examples described can be combined into one module or further divided into a plurality of sub-units.

### Example clauses

Further aspects of these teachings are provided by the subject matter of the following clauses (where it will be understood that any of these clauses can be combined with one or more of the other clauses as appropriate). Depending on the desired implementation, clause 2 may be combined with clause 1; clause 3 with clause 1 and/or clause 2; clause 4 with one or more of clauses 1-3; clause 5 with one or more of clauses 1-4; clause 6 with one or more of clauses 1-5, and clause 7 with one or more of clauses 1-6. This also applies to (a) clause 8, which may be combined with one or more of clauses 9-14, and (b) clause 15, which may be combined with one or more of clauses 16-21.

Clause 1. A method for a computer system to perform image reconstruction for radiation therapy, wherein the method comprises: obtaining projection image data associated with a target structure within a patient requiring radiation therapy; generating, using a first image reconstruction chain, first volume image data associated with the target structure based on the projection image data; generating and displaying, on a display device, a first user interface (UI) view for a user to interact with the first volume image data; generating, using a second image reconstruction chain, second volume image data associated with the target structure based on at least one of the following: the projection image data and the first volume image data; and generating and displaying, on the display device, a second UI view for the user to interact with the second volume image data.

Clause 2. The method of clause 1, wherein generating the first volume image data and the second volume image data comprises: generating multiple sets of volume image data that include at least the first volume image data and the second volume image data in a substantially parallel manner.

Clause 3.The method of clause 1, wherein generating the second volume image data comprises: generating the second volume image data using the second image reconstruction chain that is associated with at least one of the following: higher reconstruction quality and higher computational time compared to the first image reconstruction chain.

Clause 4. The method of clause 1, wherein generating the first volume image data or the second volume image data comprises: performing at least one of the following: FBP algorithm, FDK algorithm, Defrise-Clark algorithm, iterative reconstruction, iterative reconstruction with metal artifact reduction, 4D image reconstruction and image reconstruction using an artificial intelligence (AI) engine.

Clause 5. The method of clause 1, wherein the method further comprises: generating, using a third image reconstruction chain, third volume image data associated with the target structure based on at least one of the following: the projection image data, the first volume image data, and the second volume image data; and generating and displaying, on the display device, a third UI view for the user to interact with the third volume image data.

Clause 6. The method of clause 1, wherein the method further comprises: prior to generating the first volume image data and the second volume image data, generating and displaying, on the display device, a UI element to allow selection of multiple image reconstruction chains that include the first image reconstruction chain and the second image reconstruction chain; and generating and displaying, on the display device, multiple status indicators that include a first status indicator associated with first image reconstruction chain and a second status indicator associated with the second image reconstruction chain.

Clause 7. The method of clause 1, wherein the method further comprises: performing a comparison between first quality metric data associated with the first volume image data and second quality metric data associated with the second volume image data; and in response to determination that the second volume image data is higher quality than the first volume image data based on the comparison, switching from the first UI view to the second UI view.

Clause 8. A computer system, comprising: a processor; and a non-transitory computer-readable medium having stored thereon instructions that, when executed by the processor, cause the processor to perform the following: obtain projection image data associated with a target structure within a patient requiring radiation therapy; generate, using a first image reconstruction chain, first volume image data associated with the target structure based on the projection image data; generate and display, on a display device, a first UI view for a user to interact with the first volume image data; generate, using a second image reconstruction chain, second volume image data associated with the target structure based on at least one of the following: the projection image data and the first volume image data; and generate and display, on the display device, a second UI view for the user to interact with the second volume image data.

Clause 9. The computer system of clause 8, wherein the instructions for generating the first volume image data and the second volume image data cause the processor to: generate multiple sets of volume image data that include at least the first volume image data and the second volume image data in a substantially parallel manner.

Clause 10. The computer system of clause 8, wherein the instructions for generating the second volume image data cause the processor to: generate the second volume image data using the second image reconstruction chain that is associated with at least one of the following: higher reconstruction quality and higher computational time compared to the first image reconstruction chain.

Clause 11. The computer system of clause 8, wherein the instructions for generating the first volume image data or the second volume image data cause the processor to: perform at least one of the following: FBP algorithm, FDK algorithm, Defrise-Clark algorithm, iterative reconstruction, iterative reconstruction with metal artifact reduction, 4D image reconstruction and image reconstruction using an artificial intelligence (AI) engine.

Clause 12. The computer system of clause 8, wherein the instructions further cause the processor to: generate, using a third image reconstruction chain, third volume image data associated with the target structure based on at least one of the following: the projection image data, the first volume image data, and the second volume image data; and generate and display, on the display device, a third UI view for the user to interact with the third volume image data.

Clause 13. The computer system of clause 8, wherein the instructions further cause the processor to: prior to generating the first volume image data and the second volume image data, generate and display, on the display device, a UI element to allow selection of multiple image reconstruction chains that include the first image reconstruction chain and the second image reconstruction chain; and generate and display, on the display device, multiple status indicators that include a first status indicator associated with first image reconstruction chain and a second status indicator associated with the second image reconstruction chain.

Clause 14. The computer system of clause 8, wherein the instructions further cause the processor to: perform a comparison between first quality metric data associated with the first volume image data and second quality metric data associated with the second volume image data; and in response to determination that the second volume image data is higher quality than the first volume image data based on the comparison, switch from the first UI view to the second UI view.

Clause 15. A radiation therapy system, comprising: an imaging system to acquire projection image data associated with a target structure within a patient requiring radiation therapy; a display device; and a computer system configured to: generate, using a first image reconstruction chain, first volume image data associated with the target structure based on the projection image data; generate and display, on the display device, a first UI view for a user to interact with the first volume image data; generate, using a second image reconstruction chain, second volume image data associated with the target structure based on at least one of the following: the projection image data and the first volume image data; and generate and display, on the display device, a second UI view for the user to interact with the second volume image data.

Clause 16. The radiation therapy system of clause 15, wherein the computer system is configured to generate the first volume image data and the second volume image data by generating multiple sets of volume image data that include at least the first volume image data and the second volume image data in a substantially parallel manner.

Clause 17. The radiation therapy system of clause 15, wherein the computer system is configured to generate the second volume image data by: generating the second volume image data using the second image reconstruction chain that is associated with at least one of the following: higher reconstruction quality and higher computational time compared to the first image reconstruction chain.

Clause 18. The radiation therapy system of clause 15, wherein the computer system is configured to generate the first volume image data or the second volume image data by: performing at least one of the following: FBP algorithm, FDK algorithm, Defrise-Clark algorithm, iterative reconstruction, iterative reconstruction with metal artifact reduction, 4D image reconstruction and image reconstruction using an artificial intelligence (AI) engine.

Clause 19. The radiation therapy system of clause 15, wherein the computer system is further configured to: generate, using a third image reconstruction chain, third volume image data associated with the target structure based on at least one of the following: the projection image data, the first volume image data, and the second volume image data; and generate and display, on the display device, a third UI view for the user to interact with the third volume image data.

Clause 20. The radiation therapy system of clause 15, wherein the computer system is further configured to: prior to generating the first volume image data and the second volume image data, generate and display, on the display device, a UI element to allow selection of multiple image reconstruction chains that include the first image reconstruction chain and the second image reconstruction chain; and generate and display, on the display device, multiple status indicators that include a first status indicator associated with first image reconstruction chain and a second status indicator associated with the second image reconstruction chain.

Clause 21. The radiation therapy system of clause 15, wherein the computer system is further configured to: perform a comparison between first quality metric data associated with the first volume image data and second quality metric data associated with the second volume image data; and in response to determination that the second volume image data is higher quality than the first volume image data based on the comparison, switch from the first UI view to the second UI view.

Those skilled in the art will recognize that a wide variety of modifications, alterations, and combinations can be made with respect to the above described embodiments without departing from the scope of the invention, and that such modifications, alterations, and combinations are to be viewed as being within the ambit of the inventive concept.

## Claims

1. A method for a computer system to perform image reconstruction for radiation therapy, wherein the method comprises:
obtaining projection image data associated with a target structure within a patient requiring radiation therapy;
generating, using a first image reconstruction chain, first volume image data associated with the target structure based on the projection image data;
generating and displaying, on a display device, a first user interface, UI, view for a user to interact with the first volume image data;
generating, using a second image reconstruction chain, second volume image data associated with the target structure based on at least one of the following: the projection image data and the first volume image data; and
generating and displaying, on the display device, a second UI view for the user to interact with the second volume image data.

2. The method of claim 1, wherein generating the first volume image data and the second volume image data comprises:
generating multiple sets of volume image data that include at least the first volume image data and the second volume image data in a substantially parallel manner.

3. The method of claim 1 or 2, wherein generating the second volume image data comprises:
generating the second volume image data using the second image reconstruction chain that is associated with at least one of the following: higher reconstruction quality and higher computational time compared to the first image reconstruction chain.

4. The method of claim 1, 2 or 3, wherein generating the first volume image data or the second volume image data comprises:
performing at least one of the following: filtered backprojection, FBP, algorithm, Feldkamp-David-Kress, FDK, algorithm, Defrise-Clark algorithm, iterative reconstruction, iterative reconstruction with metal artifact reduction, four-dimensional, 4D, image reconstruction and image reconstruction using an artificial intelligence, AI, engine.

5. The method of any one of claims 1 to 4, wherein the method further comprises:
generating, using a third image reconstruction chain, third volume image data associated with the target structure based on at least one of the following: the projection image data, the first volume image data, and the second volume image data; and
generating and displaying, on the display device, a third UI view for the user to interact with the third volume image data.

6. The method of any one of claims 1 to 5, wherein the method further comprises:
prior to generating the first volume image data and the second volume image data, generating and displaying, on the display device, a UI element to allow selection of multiple image reconstruction chains that include the first image reconstruction chain and the second image reconstruction chain; and
generating and displaying, on the display device, multiple status indicators that include a first status indicator associated with first image reconstruction chain and a second status indicator associated with the second image reconstruction chain.

7. The method of any one of claims 1 to 6, wherein the method further comprises:
performing a comparison between first quality metric data associated with the first volume image data and second quality metric data associated with the second volume image data; and
in response to determination that the second volume image data is higher quality than the first volume image data based on the comparison, switching from the first UI view to the second UI view.

8. A computer system, comprising:
a processor; and
a non-transitory computer-readable medium having stored thereon instructions that, when executed by the processor, cause the processor to perform the following:
obtain projection image data associated with a target structure within a patient requiring radiation therapy;
generate, using a first image reconstruction chain, first volume image data associated with the target structure based on the projection image data;
generate and display, on a display device, a first user interface (UI) view for a user to interact with the first volume image data;
generate, using a second image reconstruction chain, second volume image data associated with the target structure based on at least one of the following: the projection image data and the first volume image data; and
generate and display, on the display device, a second UI view for the user to interact with the second volume image data.

9. The computer system of claim 8, wherein the instructions cause the processor to perform the method of any one of claims 2 to 7.

10. A radiation therapy system, comprising:
an imaging system to acquire projection image data associated with a target structure within a patient requiring radiation therapy;
a display device; and
a computer system configured to:
generate, using a first image reconstruction chain, first volume image data associated with the target structure based on the projection image data;
generate and display, on the display device, a first user interface, UI, view for a user to interact with the first volume image data;
generate, using a second image reconstruction chain, second volume image data associated with the target structure based on at least one of the following: the projection image data and the first volume image data; and
generate and display, on the display device, a second UI view for the user to interact with the second volume image data.

11. The radiation therapy system of claim 10, wherein the computer system is configured to generate the first volume image data and the second volume image data by:
generating multiple sets of volume image data that include at least the first volume image data and the second volume image data in a substantially parallel manner.

12. The radiation therapy system of claim 10 or 11, wherein the computer system is configured to generate the second volume image data by:
generating the second volume image data using the second image reconstruction chain that is associated with at least one of the following: higher reconstruction quality and higher computational time compared to the first image reconstruction chain.

13. The radiation therapy system of claim 10, 11 or 12, wherein the computer system is configured to generate the first volume image data or the second volume image data by:
performing at least one of the following: filtered backprojection, FBP, algorithm, Feldkamp-David-Kress, FDK, algorithm, Defrise-Clark algorithm, iterative reconstruction, iterative reconstruction with metal artifact reduction, four-dimensional (4D) image reconstruction and image reconstruction using an artificial intelligence (AI) engine.

14. The radiation therapy system of any one of claims 10 to13 , wherein the computer system is further configured to:
generate, using a third image reconstruction chain, third volume image data associated with the target structure based on at least one of the following: the projection image data, the first volume image data, and the second volume image data; and
generate and display, on the display device, a third UI view for the user to interact with the third volume image data.

15. The radiation therapy system of any one of claims 10 to 14, wherein the computer system is further configured to:
prior to generating the first volume image data and the second volume image data, generate and display, on the display device, a UI element to allow selection of multiple image reconstruction chains that include the first image reconstruction chain and the second image reconstruction chain; and generate and display, on the display device, multiple status indicators that include a first status indicator associated with first image reconstruction chain and a second status indicator associated with the second image reconstruction chain;
and/or
perform a comparison between first quality metric data associated with the first volume image data and second quality metric data associated with the second volume image data; and in response to determination that the second volume image data is higher quality than the first volume image data based on the comparison, switch from the first UI view to the second UI view.
